# FASCICULE DE BREVET EUROPEEN

(11) **EP 3 488 682 B1**
(45) Date de publication et mention de la délivrance du brevet: **26.01.2022**
(21) Numéro de dépôt: 18206962.5
(22) Date de dépôt: 19.11.2018
(51) Int. Cl.: A01D 46/28, A01D 46/26

(54) **ORGANE SECOUEUR À FIXATION PERFECTIONNÉE, ET DISPOSITIF DE SECOUAGE DE RÉCOLTE ÉQUIPÉ D'UN TEL ORGANE SECOUEUR**
VERBESSERTE SCHÜTTELELEMENTBEFESTIGUNG UND EIN ERNTESCHÜTTLER MIT DIESER
IMPROVED SHAKER ELEMENT MOUNT, AND SHAKER FOR HARVESTING COMPRISING SUCH

(30) Priorité: 22.11.2017 FR 1761046
(43) Date de publication de la demande: 29.05.2019
(73) Titulaire: Gregoire, 16100 Cognac (FR)
(72) Inventeur: PELLETIER, Etienne, 16370 Cherves-Richmont (FR)
(74) Mandataire: Novagraaf Technologies

(56) Documents cités:
- FR-A1- 2 639 177
- FR-A1- 2 654 575
- FR-A1- 2 752 666
- FR-A1- 2 789 262

## Description

### DOMAINE TECHNIQUE DE L'INVENTION

L'invention concerne un secoueur pour machine à récolter, notamment à vendanger.

L'invention concerne aussi un dispositif de secouage équipé d'un tel secoueur.

### ARRIERE PLAN TECHNIQUE DE L'INVENTION

La présente invention concerne le domaine de la récolte mécanique de baies à partir d'arbustes fruitiers, visant plus spécialement le domaine de la machine à vendanger.

La présente invention se rapporte plus particulièrement à une machine à vendanger du type, comportant deux ensembles de secouage disposés de part et d'autre d'un plan médian vertical, chacun des ensembles de secouage comportant au moins un support oscillant entraîné en rotation oscillante et des secoueurs solidaires du support oscillant.

Afin d'obtenir une qualité de vendange optimale tout en respectant la végétation ainsi que le palissage, il est nécessaire de positionner les secoueurs uniquement dans la zone où il y a des grappes à récolter. En particulier un mauvais positionnement des secoueurs peut provoquer l'oscillation des piquets constituant le palissage dans toutes les directions, pouvant entraîner une rupture des piquets.

De même, suivant le type de cépage à récolter, la distance entre les secoueurs sur les plans horizontaux doit pouvoir être modifiée en utilisant des emplacements prédéfinis.

En outre, des réglages tels que l'amplitude de secouage et le pincement entre deux secoueurs disposés de part et d'autre du plan vertical médian du système de l'ensemble de secouage, s'avèrent nécessaires.

Aussi, et afin de régler les secoueurs de manière optimale, il s'avère nécessaire de procéder à de nombreux montages et démontages des secoueurs sur les supports oscillants.

Le document FR-A1-2.752.666 décrit un secoueur pour machine à vendange ou à récolter des fruits ou des baies.

Classiquement, chaque secoueur est fixé au support oscillant par boulonnage, rivetage ou vissage au moyen de brides, comme décrit par exemple dans la demande de brevet français FR-A1-2.654.575.

Une autre solution est décrite et représentée dans le document FR-A1-2.862.481 dans laquelle chaque tronçon d'extrémité libre de fixation d'un secoueur est fixé au moyen d'une monture tubulaire dédiée.

Ces solutions sont soit insuffisamment fiables en utilisation et/ou trop coûteuse.

Il existe ainsi un besoin important pour une nouvelle conception fiable d'un secoueur et de sa technique de montage et de fixation, et de préférence sans avoir à modifier la conception des dispositifs de secouage existant, afin notamment de pouvoir les équiper de tels nouveaux secoueurs.

### BREF RESUME DE L'INVENTION

L'invention propose un organe secoueur, pour un dispositif de secouage latéral pour machine à récolter, qui est constitué d'une tige repliée sur elle-même en forme d'une épingle à cheveux et dont chacun des deux tronçons axiaux d'extrémité est un tronçon de fixation de la tige repliée, caractérisé en ce qu'au moins un tronçon de fixation de la tige repliée comporte :
- un méplat d'orientation axiale ;
- et une portion de surface externe en arc de cylindre convexe.

Ainsi, le tronçon de fixation est cylindrique mais à section non de révolution.

Par exemple, chacun des deux tronçons de fixation de la tige repliée est conforme à l'invention et comporte un méplat d'orientation axiale, une portion de surface externe en arc de cylindre convexe.

L'invention propose aussi un dispositif de secouage latéral pour machine à récolter comportant un ensemble de secouage latéral alternatif comprenant au moins un organe secoueur selon l'invention qui fixé sur une face d'un support au moyen d'une bride de fixation par serrage comportant un logement concave complémentaire du tronçon de fixation d'un organe secoueur.

Selon d'autres caractéristiques du dispositif de secouage:
- la bride de fixation est réalisée en tôle déformable élastiquement lors des opérations de montage et de fixation du tronçon de fixation sur le support ;
- la bride de fixation en tôle comporte deux ailes axiales planes et opposées de fixation par vissage qui sont reliées entre elles par une branche axiale de raccordement en arc de cylindre qui délimite le logement concave ;
- chaque aile de fixation est fixée sur le support par une paire de vis espacées axialement ;
- en position montée et serrée, il existe un jeu entre au moins une aile de fixation de la bride de fixation et une portion en vis-à-vis de la face du support.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un exemple de conception d'un dispositif de secouage comportant des secoueurs selon l'invention fixés sur deux paires de supports oscillants du dispositif ;
- la figure 2 est une vue en perspective de l'un des six secoueurs équipant le dispositif illustré à la figure 1 ;
- la figure 3 est une vue de détail à plus grande échelle de l'extrémité libre de l'un des deux tronçons de fixation du secoueur illustré à la figure 2 ;
- la figure 4 est une vue de détail en perspective illustrant la semelle de l'un des supports du dispositif de secouage illustré à la figure 1 en association avec une bride de montage et de serrage d'un tronçon de fixation d'un secoueur selon l'invention ;
- la figure 5 est une vue analogue à celle de la figure 4 sur laquelle le tronçon de fixation est représenté en position montée dans la bride ;
- la figure 6 est une vue axiale en bout de l'ensemble représenté à la figure 5 ;
- la figure 7 est une vue analogue à celle des figures 4 et 5 sur laquelle le tronçon de fixation est représenté en position montée et serré sur la semelle du support.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative des orientations longitudinale, verticale et transversale indiquées par le trièdre "L,V,T" des figures. On définit aussi un plan horizontal qui s'étend longitudinalement et transversalement.

Dans la description qui va suivre, on ne décrira en détail que les secoueurs et leur mode de fixation selon l'invention sur des supports d'un dispositif de secouage 100 appartenant à une machine à vendanger, la conception générale secouage et de la machine à vendanger pouvant être de tous types connus de l'homme du métier.

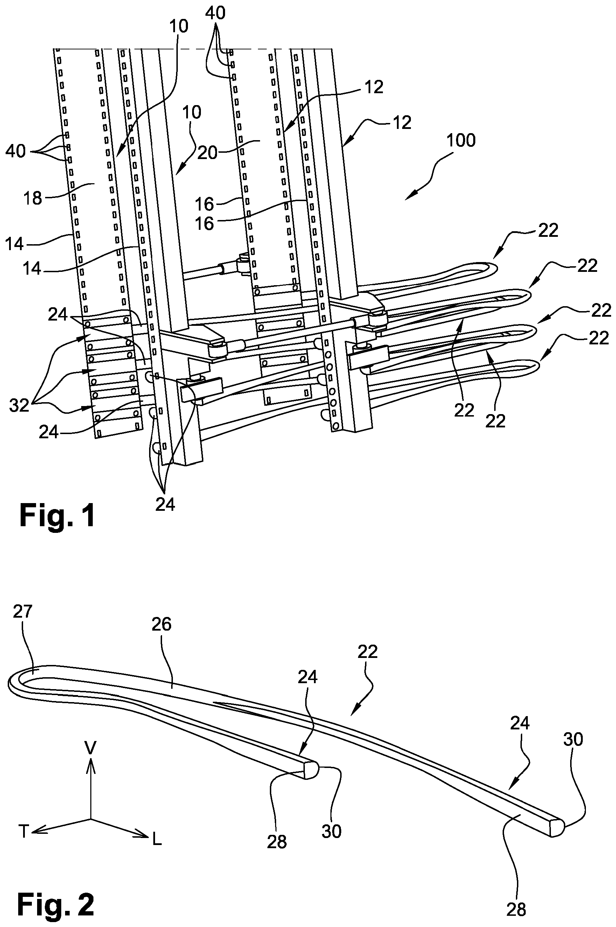

On a représenté à la figure 1 deux paires de supports verticaux comportant chacune un support avant 10 et un support arrière 12 dont chacun d'orientation verticale et comporte une semelle d'orientation verticale 14, 16 respectivement est délimitée par une face verticale 18, 20 respectivement de fixation des organes de secouage aussi appelés secoueurs 22.

Le dispositif 100 de secouage comporte ici, à titre d'exemple non limitatif, deux séries de trois secoueurs 22 qui sont agencés verticalement les uns au-dessus des autres.

Selon une conception générale connue, un secoueur 22 est une pièce en forme d'une tige cylindrique (26) qui est repliée sur elle-même en forme générale d'une épingle à cheveux et qui s'étend sensiblement dans un plan horizontal lorsqu'il est fixé sur le dispositif de secouage.

De manière univoque, dans la présente description et dans les revendications, une épingle à cheveux désigne une tige recourbée à deux branches (ou brins) ouvertes reliées entre elles par un tronçon coudé en forme de boucle à 180 degrés d'angle, du type de celle qui sert à fixer les cheveux.

Chaque secoueur 22 comporte ainsi deux tronçons d'extrémité libre avant et arrière 24, qui sont décalés longitudinalement l'un par rapport à l'autre et dont chacun constitue un tronçon de fixation du secoueur 22 sur un support avant 10 et sur un support arrière 12 d'une paire de supports associés 10, 12.

Chaque organe secoueur est ainsi constitué d'une tige repliée sur elle-même en forme d'une épingle à cheveux et dont chacun des deux tronçons axiaux d'extrémité est un tronçon de fixation 24 de la tige repliée 26.

Ainsi, les deux tronçons d'extrémité libre de fixation 24 de la tige 26 sont dirigés vers l'avant tandis que la boucle 27 repliée à 180 degrés est dirigée vers l'arrière en considérant le sens d'avancement du dispositif de secouage par rapport à la vigne à vendanger.

De manière connue, le corps longitudinal principal d'un secoueur 22 est réalisé sous la forme d'une tige cylindrique 26 de section sensiblement circulaire.

À titre non limitatif, la conception de chacun des deux tronçons de fixation 24 d'un même secoueur 22 est ici identique, de même que celle de ses moyens de fixation et de serrage.

Conformément aux enseignements de l'invention, chaque tronçon de fixation 24 est cylindrique d'orientation générale axiale longitudinale d'arrière en avant, mais sa section n'est pas circulaire.

Sur toute sa longueur, le tronçon de fixation 24 comporte un méplat 28 d'orientation axiale et une portion de surface externe convexe 30 sensiblement en arc de cylindre convexe d'orientation axiale.

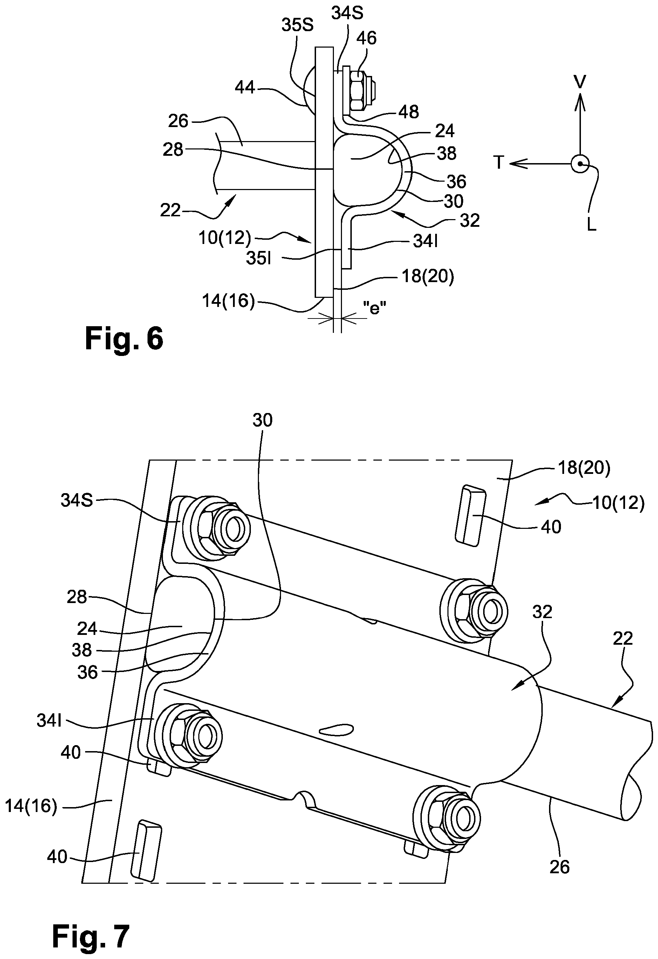

Comme on peut le voir notamment à la figure 6, le méplat 28 est conçu pour coopérer en appui transversal contre une portion en vis-à-vis de la face verticale plane 18, 20 de la semelle associée 14, 16 sur laquelle le tronçon de fixation 24 doit être monté et fixé.

Le tronçon de fixation 24 et monter est fixé au moyen d'une bride 32 de fixation par serrage.

La bride 32 est une pièce réalisée par exemple en tôle déformable élastiquement.

En position montée sur un support 10, 12, la bride 32 s'étend globalement selon une direction axiale longitudinale.

La bride de fixation 32 comporte deux ailes latérales planes opposées de fixation supérieure 34S est inférieure 34I dont chacune constitue une aile de fixation de la bride de fixation 32 par vissage.

Chaque aile de fixation 34S et 34I est délimitée par une face plane d'appui 35S, 35I respectivement.

Les deux ailes de fixation 34S et 34I sont reliées entre elles par une branche centrale 36 de raccordement globalement en forme d'arc semi cylindrique qui délimite intérieurement un logement interne concave semi-cylindrique 38 d'orientation axiale longitudinale.

La longueur axiale de la bride 32 et notamment de sa branche centrale incurvée de raccordement 36 est inférieure à la longueur axiale du tronçon de fixation 24.

La bride 32 est fixée sur une face 18, 20 d'un support vertical 10, 12 par vissage dans des trous 40 prévus à cet effet sur les semelles des supports, notamment sous forme de séries de trous oblongs 40 d'orientation verticale afin de permettre notamment un réglage précis de la position verticale d'une bride de fixation 32 sur le support associé 10, 12.

Chaque aile de fixation 34S, 34I comportent à cet effet deux trous de fixation axialement opposés 42S, 42I.

La fixation est assurée, pour chaque trou par un ensemble vis 44 - écrou 46 avec interposition d'une rondelle 48.

Le montage et la fixation par serrage au moyen d'une bride de fixation 32 d'un tronçon de fixation 24 d'un secoueur 22 selon l'invention est de préférence réalisée de la manière suivante.

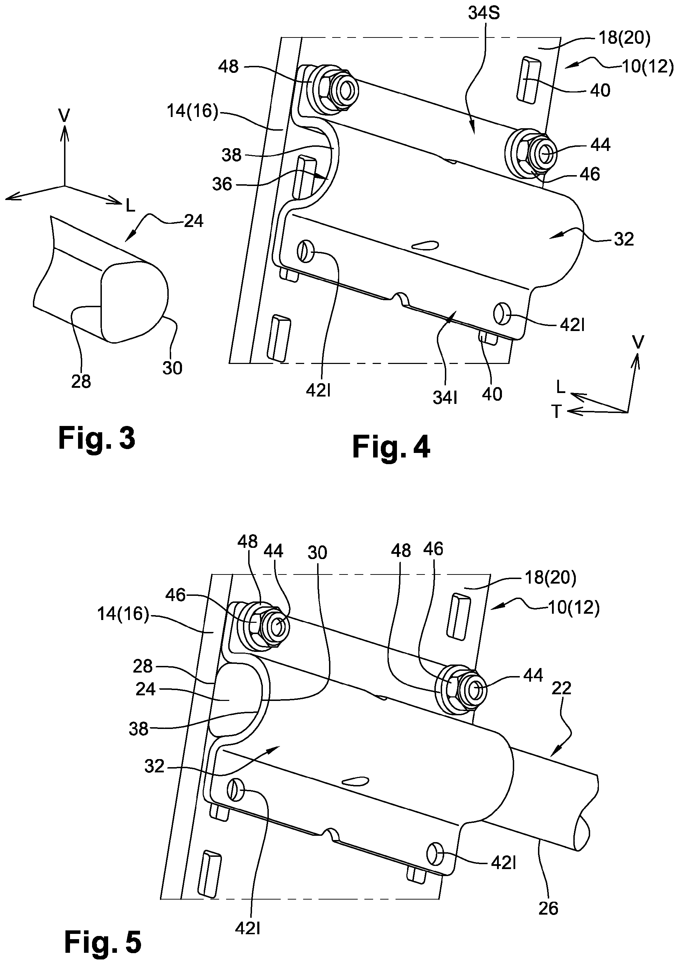

On commence par monter et fixer partiellement la bride de fixation 32 sur le support associé 10, 12 - comme illustré à la figure 4 - en fixant et en serrant transversalement l'aile de fixation supérieure 34 S.

L'opérateur introduit ensuite axialement le tronçon de fixation 24 dans le logement concave 38 délimité par la branche centrale de raccordement 36 comme illustré à la figure 5, avec facilité et possibilité de réglage selon la direction longitudinale dans la mesure où la bride de fixation 32 n'est pas encore complètement fixée et serrée.

Ainsi, dans cet état et comme on peut le voir notamment à la figure 6, il existe un jeu transversal « e » entre la portion de la face 18,20 et la face d'appui 35 I de l'aile inférieure de fixation 34I.

Après un positionnement et un réglage corrects du secoueur 22 et de ses tronçons de fixation 24, l'opération de fixation par serrage se poursuit par la fixation par vissage de l'aile de fixation inférieure 34I au moyen de deux ensembles vis -écrou associés à travers les trous 42 I.

Un serrage efficace et ainsi assuré par déformation élastique de la bride de fixation 32 qui vient « épouser » le contour externe convexe en arc de cylindre 30 du tronçon de fixation 24 en assurant un serrage maximal par friction entre les surfaces concave 38 est convexe 30.

Si l'on souhaite modifier le réglage en position axiale longitudinale d'un tronçon de fixation 24 il suffit de desserrer légèrement l'aile de fixation inférieure 34I, de faire coulisser le tronçon de fixation 24 à l'intérieur du logement concave 38, puis de serrer à nouveau la bride fixation 32 au moyen de l'aile de fixation inférieure 34I.

En position montée, fixée et serrée comme illustré à la figure 7, le tronçon de fixation 24 est non seulement positionné et bloqué de manière précise et fiable, mais le méplat 28 serré en appui sur la portion de face plane en vis-à-vis 18, 20 du support associé 10, 12 assure une grande stabilité en fonctionnement, notamment sans rotation relative possible du tronçon de fixation 24 autour de son axe général à l'intérieur de la bride de fixation 32, ni par rapport à la surface 18, 20.

## Revendications

1. Organe secoueur (22), pour un dispositif de secouage latéral pour machine à récolter, qui est constitué d'une tige repliée sur elle-même en forme d'une épingle à cheveux et dont chacun des deux tronçons axiaux d'extrémité est un tronçon de fixation (24) de la tige repliée (26),
**caractérisé en ce qu'**au moins un tronçon de fixation (24) de la tige repliée (26) comporte :
- un méplat (28) d'orientation axiale ;
- et une portion de surface externe en arc de cylindre convexe (30).

2. Organe secoueur (22) selon la revendication 1, **caractérisé en ce que** chacun des deux tronçons de fixation (24) de la tige repliée (26) comporte :
- un méplat (28) d'orientation axiale ;
- et une portion de surface externe en arc de cylindre convexe (30).

3. Dispositif de secouage (100) latéral pour machine à récolter comportant un ensemble de secouage latéral alternatif comprenant au moins un organe secoueur (22) selon l'une quelconque des revendications précédentes qui fixé sur une face (18, 20) d'un support (10, 12) au moyen d'une bride (32) de fixation par serrage comportant un logement concave (38) complémentaire du tronçon de fixation (24) dudit organe secoueur (22).

4. Dispositif de secouage selon la revendication 3, **caractérisé en ce que** la bride de fixation (32) est réalisée en tôle déformable élastiquement lors des opérations de montage et de fixation du tronçon de fixation (24) sur le support (10, 12).

5. Dispositif de secouage selon la revendication 4, **caractérisé en ce que** la bride de fixation (32) en tôle comporte deux ailes opposées (34S, 34I) de fixation par vissage qui sont reliées entre elles par une branche axiale de raccordement (36) en arc de cylindre qui délimite ledit logement concave (38).

6. Dispositif de secouage selon la revendication 5, **caractérisé en ce que** chaque aile de fixation (34S, 34I) est fixée sur le support (10, 12) par une paire de vis (44) espacées axialement.

7. Dispositif de secouage selon la revendication 5 ou 6, **caractérisé en ce que**, en position montée et serrée, il existe un jeu (e) entre au moins une aile (34I, 35I) de fixation de la bride de fixation (32) et une portion en vis-à-vis de ladite face (18, 20) du support (10, 12).

## Patentansprüche

1. Schüttlerorgan (22), für eine Seitenschüttler Vorrichtung für eine Erntemaschine, das aus einem in sich selbst gebogenen Schaft in Form einer Haarnadel besteht und von dem jeder der beiden axialen Endabschnitte ein Befestigungsabschnitt (24) des gebogenen Schafts (26) ist,
**dadurch gekennzeichnet, dass** mindestens ein Befestigungsabschnitt (24) der umgebogenen Stange (26) umfasst:
- eine axial ausgerichtete Abflachung (28);
- und einen konvexen zylinderbogenförmigen Außenflächenabschnitt (30).

2. Schüttlerorgan (22) nach Anspruch 1, **dadurch gekennzeichnet, dass** jeder der beiden Befestigungsabschnitte (24) der umgebogenen Stange (26) aufweist:
- eine axial ausgerichtete Abflachung (28) ;
- und einen konvexen zylinderbogenförmigen Außenflächenabschnitt (30).

3. Seitenschüttelvorrichtung (100) für eine Erntemaschine mit einer alternativen Seitenschütteleinheit, die mindestens ein Schüttlerorgan (22) nach einem der vorhergehenden Ansprüche umfasst, das an einer Fläche (18, 20) eines Trägers (10, 12) mittels eines Klemmbefestigungsflansches (32) befestigt ist, der eine konkave Aufnahme (38) aufweist, die komplementär zum Befestigungsabschnitt (24) des Schüttlerorgans (22) ist.

4. Schüttelvorrichtung nach Anspruch 3, **dadurch gekennzeichnet, dass** der Befestigungsflansch (32) aus einem Blech besteht, das bei den Montage- und Befestigungsvorgängen des Befestigungsabschnitts (24) am Träger (10, 12) elastisch verformbar ist.

5. Schüttelvorrichtung nach Anspruch 4, **dadurch gekennzeichnet, dass** der Befestigungsflansch (32) aus Blech zwei gegenüberliegende Flügel (34S, 34I) zur Schraubbefestigung aufweist, die durch einen axialen Verbindungsschenkel (36) in Form eines Zylinderbogens miteinander verbunden sind, der die genannte konkave Aufnahme (38) begrenzt.

6. Schüttelvorrichtung nach Anspruch 5, **dadurch gekennzeichnet, dass** jeder Befestigungsflügel (34S, 34I) durch ein Paar axial beabstandeter Schrauben (44) an der Halterung (10, 12) befestigt ist.

7. Schüttelvorrichtung nach Anspruch 5 oder 6, **dadurch gekennzeichnet, dass** in der montierten und festgezogenen Position ein Spiel (e) zwischen mindestens einem Befestigungsflügel (34I, 35I) des Befestigungsflansches (32) und einem gegenüberliegenden Abschnitt der genannten Fläche (18, 20) des Trägers (10, 12) besteht.

## Claims

1. A shaker (22) for a lateral shaking device for a harvesting machine, which is constituted by a rod folded back on itself in the shape of a hairpin, and each of the two axial end sections of which is a fastening section (24) of the folded back rod (26),
**characterized in that** at least one fixing section (24) of the folded rod (26) comprises:
- an axially oriented flat (28) ;
- and a convex cylindrical arc outer surface portion (30).

2. A shaker (22) according to claim 1, **characterized in that** each of the two fixing sections (24) of the folded rod (26) comprises:
- an axially oriented flat (28) ;
- and a convexly curved outer surface portion (30).

3. Lateral shaker device (100) for a harvesting machine comprising a reciprocating lateral shaker assembly comprising at least one shaker member (22) according to any one of the preceding claims which is fixed to a face (18, 20) of a support (10, 12) by means of a clamping fixing flange (32) comprising a concave housing (38) complementary to the fixing section (24) of said shaker member (22).

4. Shaking device according to claim 3, **characterized in that** the fixing flange (32) is made of sheet metal which is elastically deformable during the operations of mounting and fixing the fixing section (24) to the support (10, 12).

5. Shaking device according to claim 4, **characterized in that** the sheet metal fixing flange (32) comprises two opposite wings (34S, 34I) for fixing by screwing which are connected together by an axial connecting branch (36) in the form of an arc of a cylinder which delimits said concave housing (38).

6. A shaker device according to claim 5, **characterized in that** each fixing wing (34S, 34I) is fixed to the support (10, 12) by a pair of axially spaced screws (44).

7. Shaking device according to claim 5 or 6, **characterized in that**, in the mounted and tightened position, there is a clearance (e) between at least one fixing wing (34I, 35I) of the fixing flange (32) and a facing portion of said face (18, 20) of the support (10, 12).
